# EUROPEAN PATENT APPLICATION

(11) **EP 4 596 154 A1**
(43) Date of publication of application: **06.08.2025**
(21) Application number: 25154959.8
(22) Date of filing: 30.01.2025
(51) Int. Cl.: B23D 59/00, B27B 5/065, B27G 19/02

(54) **SAWING MACHINE**

(30) Priority: 31.01.2024 IT 202400001944
(71) Applicant: SCM Group S.p.A., 47921 Rimini (RN) (IT)
(72) Inventor: GIAVOLUCCI, Gianluca, 47921 RIMINI (RN) (IT)
(74) Representative: Tiburzi, Andrea

(57) **Abstract**

The present invention relates to an improved sawing machine (M).

Said sawing machine comprises a working station (WS) comprising on turn a cutting unit (GB), wherein said cutting unit (GB) comprises at least a first blade (B1, B2), as well as a first casing (C1) in which said cutting unit (GB) is housed when said cutting unit (GB) is not in use and/or a second casing (C2) for receiving a quantity of machining chips generated by one or more machining performed by said cutting unit (GB) on said at least one piece (P1, P2).

Each casing (C1, C2) comprises a respective opening (A1, A2) and a respective door (D1) for closing said opening (A1, A2) and respective moving means (MM1, MM2) for opening the respective door (D1, D2).

Said sawing machine (M) comprises storage means (SM) and a logic control unit (U) configured to acquire a machining parameter, through an acquiring device (SD), and compare said machining parameter with a reference parameter stored in said storage means (SM) and send a signal to the respective moving means (MM1, MM2) of the first casing (C1) and/or of the second casing (C2) to open the respective door (D1, D2).

## Description

The present invention relates to an improved sawing machine.

In particular, the present invention relates to the structure of a sawing machine comprising a first casing and/or a second casing (included in a working station being part of said sawing machine), each of which is provided with a respective door, wherein said sawing machine is designed to automatically open the door of said first casing and/or the door of said second casing.

### Prior art

A sawing machine of a known type comprises at least one loading station, one unloading station and one working station, arranged between said loading station and said unloading station.

The loading station comprises a support plane on which the workpieces are positioned, and a pusher system to exert a push on said workpieces so that said workpieces advance on said support plane along a forward direction towards the working station.

Said pusher system is a system of movable arms, each of which is provided with a gripper for gripping a piece and pushing said piece on said support plane towards said working station (so that said piece is machined) and beyond said working station.

The working station is a cutting station and comprises a cutting unit for cutting said pieces along a cutting line, transverse to said forward direction.

In order to cut said pieces, said cutting unit is movable along said cutting line.

In general, the cutting unit can cut single pieces or a group of pieces or a plurality of groups of pieces.

In particular, said cutting unit can comprise a first blade for scoring a piece and a second blade for cutting said first piece.

The unloading station can comprise a plane or a plurality of planes, wherein the planes of said plurality of planes are parallel to each other.

The pieces machined by the working station reach the unloading station and are collected by an operator or a mechanical arm.

Furthermore, the working station comprises at least one casing.

Said casing is intended to receive the cutting unit (and therefore said first blade and said second blade), when said cutting unit is not in use.

Said casing comprises an opening and a door, in which said door is opened and closed manually by an operator if necessary.

A first disadvantage of said sawing machine of a known type is given by the fact that the timing for the maintenance of at least one of the two blades and the timing for the replacement of at least one of the two blades are based on the experience of the operator.

Consequently, if the operator is not sufficiently experienced, he runs the risk of opening the casing more times than it would have been necessary to open the casing, with the consequent loss of time for the operator.

The operator must in fact approach the casing and open the door to verify the status of at least one of the two blades.

A second disadvantage is given by the fact that it is necessary for the sawing machine to be in standby mode when maintenance and replacement activities of at least one of the two blades are carried out.

Therefore, if the operator is not sufficiently experienced, the number of times the sawing machine is in standby mode is greater than the number of times it would actually have been necessary for the sawing machine to be in standby mode.

Furthermore, it should be considered that often an operator may be engaged in an activity (manual or not) and cannot leave his position to go and open the casing.

For example, an operator may be busy viewing data or modifying data through a user interface module (such as a display) of the sawing machine and cannot move.

Consequently, a further disadvantage is given by the fact that the operator does not have the possibility of opening the casing when he would like to open it.

### Aim of the invention

The aim of the present invention is to overcome said disadvantages, providing a sawing machine comprising a working station, comprising in turn a cutting unit, as well as a first casing to receive said cutting unit and/or a second casing to receive a quantity of machining chips, in which said sawing machine is configured to automatically open a door of said first casing to facilitate an operator when a blade of said cutting unit must be subjected to maintenance or replaced, and/or to open a door of said second casing to facilitate an operator in removing machining chips.

### Object of the invention

It is therefore object of the present invention a sawing machine for sawing pieces comprising:
- a support plane for at least one piece,
- a pusher system configured to push said at least one piece on said support plane along a forward direction,
- at least one working station comprising:
   a slot defining a cutting line, wherein said slot has a first end and a second end and said cutting line is transverse to said forward direction,
   a cutting unit for cutting at least said piece along said cutting line,
   wherein said cutting unit is movable between said first end and said second end of said slot,
   a first casing for receiving said cutting unit when said cutting unit is not in use, and/or at least one second casing for receiving a quantity of machining chips generated by one or more machining performed by said cutting unit on said at least one piece,
   wherein said first casing comprises a first opening, a first door for closing said first opening, and first moving means for opening said first door, and said second casing comprises a second opening, a second door for closing said second opening, and second moving means for
   opening said second door,
- an acquiring device for acquiring a machining parameter,
- storage means in which a reference parameter and a predetermined range of values centered on said reference parameter are stored,
- a logic control unit configured to:
   ∘ acquire said machining parameter by said acquiring device,
   ∘ verify if said acquired machining parameter is outside said predetermined range of value centered on said reference parameter,
   ∘ if said acquired machining parameter is outside said predetermined range of values centered on said reference parameter, send a first signal to said first moving means for opening said first door of said first casing and/or a second signal to said second moving means for opening said second door of said second casing.

Further preferred embodiments are described in the dependent claims.

### Attached figure list

The present invention will be now described, for illustrative, but not limitative purposes, according to its embodiment, making particular reference to the enclosed figures, wherein:
Figure 1 is a schematic view of a sawing machine, according to the invention, wherein said sawing machine comprises a working station and said working station comprises a first casing for receiving a cutting unit and a second casing for receiving a quantity of machining chips;
Figure 2 is a schematic view of the working station of the sawing machine of Figure 1, wherein a part has been removed for showing the cutting unit of the working station, wherein said cutting unit comprises a first blade and a second blade;

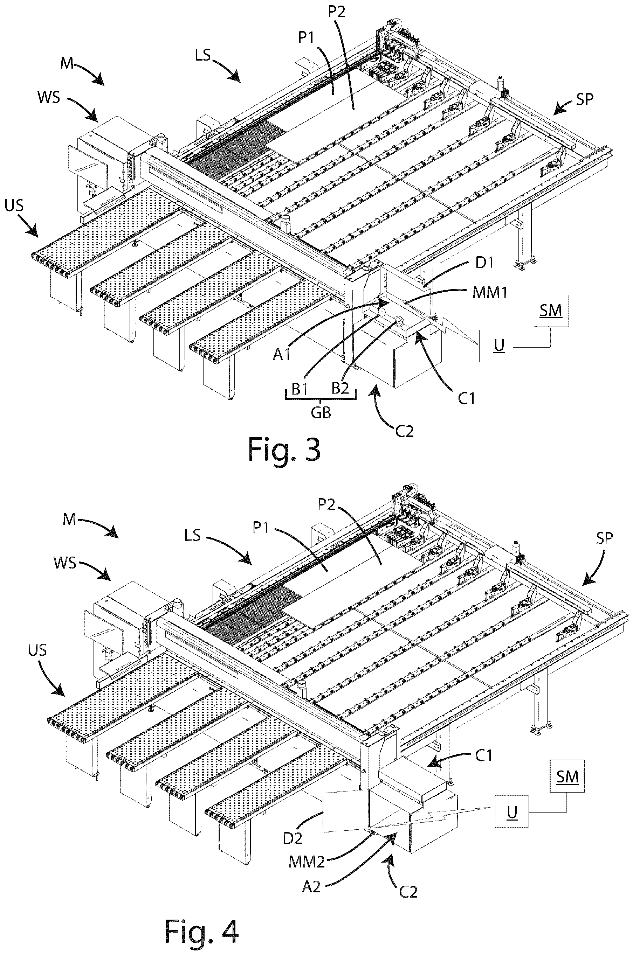

Figure 3 is a schematic view of the sawing machine of Figure 1, wherein the door of the first casing is open and the door of the second casing is closed;
Figure 4 is a schematic view of the sawing machine of Figure 1, wherein the door of the first casing is closed and the door of the second casing is open.

### Detailed description of the invention

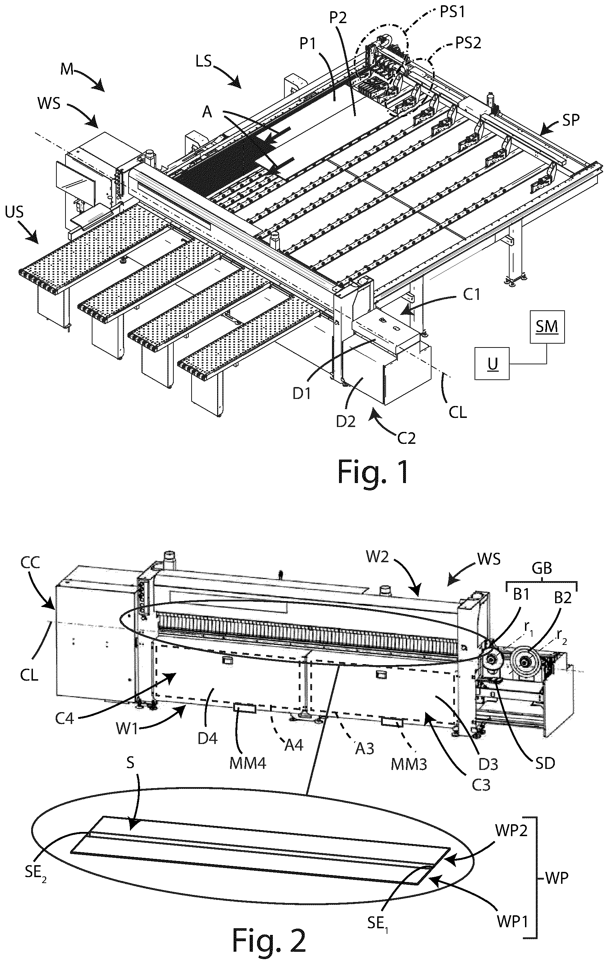

With particular reference to Figures 1 and 2, a sawing machine M for sawing pieces, according to the invention, is described.

Said pieces can, for example, be panels made of wood, ceramic, plastic, metal, glass, fibreglass.

In the embodiment that is described, said pieces are wooden panels.

The sawing machine M comprises a loading station LS, an unloading station US and a working station WS, arranged between said loading station LS and said unloading station US.

The loading station LS comprises a support plane SP on which at least one piece is positioned and a pusher system for pushing said at least one piece on said support plane SP along a forward direction A towards the working station WS.

In the embodiment that is described, a first piece P1 and a second P2 are positioned on the support plane SP.

Said pusher system comprises at least a first group of pushers PS1 to push said first piece P1 onto said support plane SP and a second group of pushers PS2, different from said first group of pushers, to push said second piece P2 onto said support plane SP.

The groups of pushers PS1, PS2 are independent of each other and consequently the first piece P1 can be pushed independently of the second piece P2.

The unloading station US can comprise a further support plane or a plurality of further support planes.

In the embodiment that is described, said loading station US comprises a plurality of further support planes.

The further support planes of said plurality of further support planes are parallel to each other.

The pieces P1, P2 machined by said working station WS reach the unloading station US and are collected by an operator or by a mechanical arm.

The working station WS is a cutting station.

Said working station WS comprises:
- a slot S defining a cutting line CL, wherein said slot S has a first end SE₁ and a second end SE₂ (opposite to said first end SE₁) and said cutting line CL) is transverse to said forward direction A,
- a cutting unit GB for cutting said pieces P1, P2 along said cutting line CL, wherein said cutting unit GB is movable between said first end SE₁ and said second end SE₂ of said slot S.

In particular, the working station WS comprises a working plane WP and the slot S divides said working plane WP into two half-planes: a first half-plane WP1 and a second half-plane WP2.

Said slot S is an opening that extends longitudinally on said working plane WP and is delimited by an edge of said first half-plane WP1 and by an edge of said second half-plane WP2.

With particular reference to the cutting line CL, said cutting line CL is defined by a transversal axis (in particular orthogonal) with respect to the forward direction A of the pieces P1, P2 on the support plane SP.

With particular reference to the cutting unit GB, said cutting unit GB can comprise one or more blades.

In the embodiment that is described, said cutting unit GB comprises a first blade B1 for scoring at least one piece and a second blade B2 for cutting said at least one piece, as well as a motor, preferably an electric motor (not shown) to move said cutting unit GB from a rest position, in which said cutting unit GB is inside a first casing C1 (described below) of the working station WS, to an operating position, in which said cutting unit GB moves inside said slot S, between said first end SE₁ and said second end SE₂.

The first blade B1 and the second blade B2 of the cutting unit GB are aligned along the same axis (coinciding with the axis that defines the cutting line CL) and rotate around a respective rotation axis r₁, r₂ perpendicular to said axis.

Furthermore, said working station WS can further comprise a first casing C1 (mentioned above) to receive said cutting unit GB when said cutting unit GB is not in use, and/or at least a second casing C2 to receive a quantity of machining chips generated by one or more machining performed by said cutting unit GB on said at least one piece P1, P2.

The first casing C1 can comprise a first opening A1, a first door D1 to close said first opening A1, and first moving means MM1 to open said first door D1.

The second casing C2 can comprise a second opening A2, a second door D2 to close said second opening A2, and second moving means MM2 to open said second door D2.

Said sawing machine M further comprises:
- an acquiring device SD for acquiring a machining parameter,
- storage means SM in which a reference parameter and a predetermined range of values centered on said reference parameter are stored,
- a logic control unit U configured to:
   ∘ acquire said machining parameter by said acquiring device SD,
   ∘ verify if said acquired machining parameter is outside said predetermined range of value centered on said reference parameter,
   ∘ if said acquired machining parameter is outside said predetermined range of values centered on said reference parameter, send a first signal to said first moving means MM1 for opening said first door D1 of said first casing C1 and/or a second signal to said second moving means MM2 for opening said second door D2 of said second casing C2.

In the embodiment that is described, said working station WS comprises said first casing C1 and said second casing C2.

Therefore, in the embodiment that is described, the logic control unit U is configured to automatically open the first door D1 of the first casing C1 and the second door D2 of the second casing C2.

If the sawing machine M comprised only the first casing C1 or the second casing C2, the logic control unit U would be configured to open the respective door D1, D2.

In other words, if said acquired machining parameter is outside the predetermined range of values centered on said reference parameter, the logic control unit U is configured to:
∘ send a first signal to said first moving means MM1 to open said first door D1 of said first casing C1, when the sawing machine M comprises only said first casing C1,
∘ send a second signal to said second moving means MM2 to open said second door D2 of said second casing C2, when the sawing machine M comprises only said second casing C2,
∘ send a first signal to said first moving means MM1 to open said first door D1 of said first casing C1 and a second signal to said second moving means MM2 to open said second door D2 of said second casing C2, when the sawing machine M comprises said first casing C1 and said second casing C2.

In the embodiment that is described, said reference parameter is a predetermined width associated with the slot S of the working station WS.

Furthermore, said acquiring device SD is arranged on the cutting unit GB and comprises a distance sensor to detect a width of the slot S of the working station WS.

Said distance sensor can be a laser sensor or an ultrasonic sensor.

In particular, said acquiring device SD is arranged on a portion of the cutting unit CL which falls within the projection of the first blade B1.

More specifically, said acquiring device SD is arranged on a front part of the cutting unit GB, i.e. the part of the cutting unit GB closest to the first end SE₁ of the slot S when the cutting unit GB is inside the first casing C1.

Consequently, in the embodiment that is described, the machining parameter is the width of said slot S.

The logic control unit U is configured to send a first signal to said first moving means MM1 to open the first door D1 of the first casing C1 and a second signal to said second moving means MM2 to open the second door D2 of the second casing C2, when said acquired machining parameter is outside a predetermined range of values centered on said reference parameter.

The value of the width of the slot S may increase over time, due to the machining performed on the pieces by the cutting unit GB.

The fall of machining chips into the slot S can cause a bending of at least one blade B1, B2 of the cutting unit GB over time and the bending of said blade can cause an increase in the width of the slot S, with the risk that the sawing machine is subject to malfunctions or breakdowns.

A first variant of the sawing machine M designed to automatically open both the first door D1 of the first casing C1 and the second door D2 of the second casing D2 is described below, although not shown in the Figures.

Said reference parameter can be a predetermined distance travelled by said cutting unit GB.

Furthermore, said acquiring device can comprise an encoder for detecting a distance travelled by said cutting unit GB, arranged on the motor of said cutting unit GB.

Consequently, in said first variant, said machining parameter is the predetermined distance travelled by said cutting unit GB.

The logic control unit U can be configured to send a first signal to said first moving means MM1 to open the first door D1 of the first casing C1 and a second signal to said second moving means MM2 to open the second door D2 of the second casing C2, when said acquired machining parameter is outside a predetermined range of values centered on said reference parameter.

A second variant of the sawing machine M designed to automatically open (only) the first door D1 of the first casing C1 is described below, although not shown in the Figures.

Said reference parameter can be a predetermined power absorbed by said cutting unit GB.

Said acquiring device can comprise an ammeter to detect a power absorbed by said cutting unit GB.

Said acquiring device can be arranged inside an electrical cabinet CC of the working station WS.

Consequently, in said second variant, said machining parameter is the power absorbed by said cutting unit GB.

The logic control unit U can be configured to send a first signal to said first moving means MM1 to open the first door D1 of the first casing C1, when said acquired machining parameter is outside a predetermined range of values centered on said reference parameter.

A third variant of the sawing machine M designed to automatically open (only) the second door D2 of the second casing C2 is described below, although not shown in the Figures.

Said reference parameter can be a predetermined time,

Said acquiring device can comprise a digital timer to record a time associated with the operating time of said cutting unit GB.

Said acquiring device can be arranged inside the electrical cabinet CC of the working station WS.

Consequently, said machining parameter is the operating time of said cutting unit GB.

The logic control unit U can be configured to send a second signal to said second moving means MM2 to open said second door D2 of said second casing C2 when said reference parameter is outside of said predetermined range of values centered on said reference parameter.

As an alternative to the third variant described above, a fourth variant of the sawing machine M, not shown in the Figures, is described below.

Said third variant of the sawing machine M is designed to automatically open (only) the second door D2 of the second casing C2.

Said reference parameter is a predetermined quantity of machining chips.

In particular, said predetermined quantity of machining chips is associated with a machining to be performed on said at least one piece P1, P2.

In other words, said reference parameter is a predetermined value associated with a quantity of machining chips.

This predetermined value is established a priori by an operator based on the machining of a piece and stored in the storage means SM.

As is known, the machining of a piece generates a quantity of machining chips and different machining can generate respective quantities of machining chips.

The predetermined value associated with a quantity of machining chips and stored in the storage means SM can be modified by an operator based on the type of machining of a piece.

In said fourth variant, said acquiring device can comprise a counter to count the number of machining performed by said cutting unit GB, wherein said machining are of the same type.

Said machining parameter can be a value equal to the sum of predetermined quantities of machining chips associated with each machining performed by said cutting unit GB.

In other words, for the same type of machining, the logic control unit U can be configured to:
∘ acquire the number of machining performed by the cutting unit GB from said counter,
∘ add the respective predetermined quantities of machining chips associated with each machining performed by said cutting unit GB,
∘ if the result of the sum of said predetermined quantities of machining chips is outside of said predetermined range of values centered on said reference parameter, send a second signal to said second moving means MM2 to open said second door D2 of said second casing C2.

Furthermore, said sawing machine M can comprise alarm means (not shown) and said logic control unit U can be configured to activate said alarm means, when said logic control unit sends the first signal to said first moving means MM1 and/or the second signal to said second moving means MM2.

Said alarm means are configured to generate an alarm signal.

For example, said alarm signal can be an acoustic and/or visual signal.

Although the sawing machine has been described with reference to a second casing C2 for receiving a quantity of machining chips, said sawing machine M can comprise further casings for receiving respective quantities of machining chips.

In the example that is described, the sawing machine M comprises at least a third casing C3 to receive machining chips arranged inside a first wall of the working station WS.

In particular, a third casing C3 and a fourth casing C4 to receive respective quantities of machining chips are arranged inside said first wall W1 of said working station WS.

Said third casing C3 comprises a third opening A3, a third door D3 to close said third opening A3 and third moving means MM3 to open said third door D3.

Said fourth casing C4 comprises a fourth opening A4, a fourth door D4 to close a fourth opening A4 and fourth moving means MM4 to open said fourth door D4.

In addition to the second signal sent to the second moving means MM2 to open the second door D2 of the second casing C2, the logic control unit U can be configured to send:
- a third signal to said third moving means MM3 to open the third door D3 of the third casing C3 (in the event that the working station WS comprises only said third casing C3 inside said first wall W1), or
- a third signal to said third moving means MM3 to open the third door D3 of the third casing C3 and a fourth signal to said fourth moving means MM4 to open the fourth door D4 of the fourth casing C4 (in the event that the working station WS comprises said third casing C3 and said fourth casing C4 inside said first wall W1).

Furthermore, in the example that is described, the sawing machine M comprises at least a fifth casing (not shown) to receive machining chips arranged inside a second wall W2 of the working station WS, opposite to said first wall W1.

In particular, a fifth casing (not shown) and a sixth casing (not shown) to receive respective quantities of machining chips are arranged inside said second wall W2.

Said fifth casing comprises a fifth opening, a fifth door for closing said fifth opening and fifth moving means for opening said fifth door.

Said sixth casing comprises a sixth opening, a sixth door for closing a sixth opening and sixth moving means for opening said sixth door.

In addition to the third signal sent to the third moving means MM3 to open the third door D3 of the third casing C3 (in the event that the working station WS comprises only said third casing C3 inside said first wall W1) or to the third signal and the fourth signal sent respectively to said third moving means MM3 to open the third door D3 of the third casing C3 and to said fourth moving means MM4 to open the fourth door D4 of the fourth casing C4 (in the event that the working station WS comprises said third casing C3 and said fourth casing C4 inside said first wall W1), the logic control unit U can be configured to send:
- a fifth signal to said fifth moving means to open the fifth door of the fifth casing (in the event that the machining station WS comprises only said fifth casing within said second wall W2), or
- a fifth signal to said fifth moving means to open the fifth door of the fifth casing, and a sixth signal to said sixth moving means to open the sixth door of the sixth casing (in the event that the working station WS comprises said fifth casing and said sixth casing inside said second wall W2).

### Advantanges

Advantageously, the sawing machine M object of the present invention allows the first door D1 of the first casing C1 and/or the second door D2 of the second casing C2 to be opened (and preferably closed) automatically.

If the sawing machine is provided with two casings, the opening of the first door D1 of the first casing C1 is independent of the opening of the door D2 of the second casing C2.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. Sawing machine (M) for sawing pieces comprising:
- a support plane (SP) for at least one piece (P1, P2),
- a pusher system (PS1, PS2) configured to push said at least one piece (P1, P2) on said support plane (SP) along a forward direction (A),
- at least one working station (WS) comprising:
a slot (S) defining a cutting line (CL), wherein said slot (S) has a first end (SE₁) and a second end (SE₂) and said cutting line (CL) is transverse to said forward direction (A),
a cutting unit (GB) for cutting at least said piece (P1, P2) along said cutting line (CL), wherein said cutting unit (GB) is movable between said first end (SE₁) and said second end (SE₂) of said slot (S),
a first casing (C1) for receiving said cutting unit (GB) when said cutting unit (GB) is not in use, and/or at least one second casing (C2) for receiving a quantity of machining chips generated by one or more machining performed by said cutting unit (GB) on said at least one piece (P1, P2),
wherein said first casing (C1) comprises a first opening (A1), a first door (D1) for closing said first opening (A1), and first moving means (MM1) for opening said first door (D1), and said second casing (C2) comprises a second opening (A2), a second door (D2) for closing said second opening (A2), and second moving means (MM2) for opening said second door (D2),
- an acquiring device (SD) for acquiring a machining parameter,
- storage means (SM) in which a reference parameter and a predetermined range of values centered on said reference parameter are stored,
- a logic control unit (U) configured to:
∘ acquire said machining parameter by said acquiring device (SD),
∘ verify if said acquired machining parameter is outside said predetermined range of value centered on said reference parameter,
∘ if said acquired machining parameter is outside said predetermined range of values centered on said reference parameter, send a first signal to said first moving means (MM1) for opening said first door (D1) of said first casing (C1) and/or a second signal to said second moving means (MM2) for opening said second door (D2) of said second casing (C2).

2. Sawing machine (M) according to claim 1, wherein
said reference parameter is a predetermined width associated with said slot (S),
said acquiring device (SD) comprises a distance sensor to detect a width of said slot (S), and
said reference parameter is the width of said slot (S).

3. Sawing machine (M) according to claim 1, wherein
said cutting unit (CL) comprises a motor for moving said cutting unit (GB) from a rest position, in which said cutting unit (GB) is inside said first casing (C1), to an operational position, in which said cutting unit (GB) moves inside said slot (S), between said first end (SE₁) and said second end (SE₂),
wherein
said reference parameter is a predetermined distance travelled by said cutting unit (GB),
said acquiring device (SD) comprises an encoder for detecting a distance travelled by said cutting unit (GB), arranged on said motor of said cutting unit (GB), and
said machining parameter is the distance travelled by said cutting unit (GB).

4. Sawing machine (M) according to claim 1, wherein
said reference parameter is a predetermined power absorbed by said cutting unit (GB),
said acquiring device (SD) comprises an ammeter to detect a power absorbed by said cutting unit (GB), and
said machining parameter is the power absorbed by said cutting unit (GB).

5. Sawing machine (M) according to the previous claim, wherein said working station (WS) comprises an electrical cabinet (CC) and said ammeter is arranged in said electrical cabinet (CC).

6. Sawing machine (M) according to claim 1, wherein
said reference parameter is a predetermined time,
said acquiring device (SD) comprises a digital timer to record a time associated with the operating time of said cutting unit (GB), and
said machining parameter is the operating time of said cutting unit (GB).

7. Sawing machine (M) according to the previous claim, wherein said working station (WS) comprises an electrical cabinet (CC) and said digital timer is arranged in said electrical cabinet (CC).

8. Sawing machine (M) according to claim 1, wherein
said reference parameter is a predetermined quantity of machining chips and said predetermined quantity of machining chips is associated with a machining to be performed on said at least one piece (P1, P2),
said acquiring device (SD) comprises a counter to count the number of machining performed by said cutting unit (GB), and
said machining parameter is a value equal to the sum of predetermined quantities of machining chips associated with each machining performed by said cutting unit (GB).

9. Sawing machine (M) according to any one of the previous claims, wherein said sawing machine (M) comprises alarm means and said logic control unit (U) is configured to activate said alarm means, when said logic control unit (U) sends said first signal to said first moving means (MM1) and/or said second signal to said second moving means (MM2).
